# FASCICULE DE BREVET EUROPEEN

(11) **EP 0 611 360 B1**
(45) Date de publication et mention de la délivrance du brevet: **24.01.1996**
(21) Numéro de dépôt: 93900236.6
(22) Date de dépôt: 09.11.1992
(51) Int. Cl.: B65D 88/66, B65G 65/44

(54) **TREMIE EN FORME DE CAISSON A FOND VIBRANT**
KASTENFÖRMIGER TRICHTER MIT RÜTTELBODEN
BOX-SHAPED HOPPER WITH VIBRATING BOTTOM

(30) Priorité: 14.11.1991 FR 9113993
(43) Date de publication de la demande: 24.08.1994
(73) Titulaire: HO, Que, Anh, 92160 Antony (FR)
(72) Inventeur: HO, Que, Anh, F-92160 Antony (FR); COUTURIER, Jean, F-06400 Cannes (FR)
(74) Mandataire: CABINET BONNET-THIRION
(86) Numéro de dépôt international: FR9201041
(87) Numéro de publication internationale: WO9310025

(56) Documents cités:
- EP-A- 0 116 196
- CH-A- 380 653
- CH-A- 471 028
- DE-A- 2 321 998
- FR-A- 2 499 956
- US-A- 4 471 891

## Description

La présente invention concerne une trémie en forme de caisson à fond vibrant conçue d'une part pour éviter l'amoncellement et l'accumulation des matériaux ayant tendance à s'agglomérer et à adhérer sur ses parois et, d'autre part, pour faciliter le bon écoulement de ces matériaux. Une telle trémie trouve ainsi son application dans la manutention de matériaux à plus ou moins forte proportion de pulvérulents humides tels que ceux que l'on rencontre dans l'industrie pharmaceutique, en agriculture, dans les exploitations de minerais et autres industries faisant intervenir des trémies.

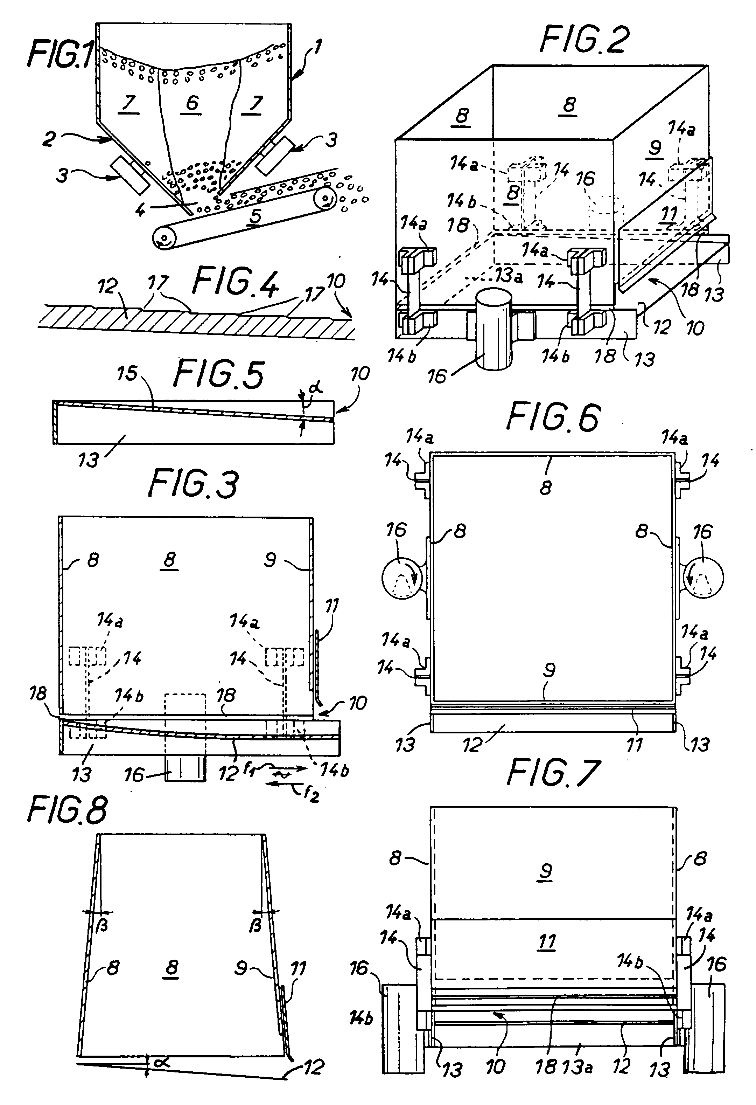

Les trémies actuellement les plus connues consistent en réservoirs en forme de pyramides renversées tronquées. On a représenté schématiquement sur la figure 1 des dessins annexés, en élévation, une trémie de ce type avec ses parois verticales 1 prolongées par ses parois 2 inclinées vers le bas et convergeant vers l'ouverture d'évacuation 4 déversant les matériaux sur un convoyeur 5. Pour faciliter l'écoulement de ces matériaux, au sein de la trémie, des dispositifs 3 sont prévus pour imprimer aux parois 2 des mouvements de vibrations.

Pendant le fonctionnement de telles trémies, on peut généralement observer deux comportements du matériau qui s'y écoule et de ce fait deux zones, à savoir : une zone centrale 6 dans laquelle le matériau s'écoule normalement et une zone 7 dans laquelle le matériau s'écoule de façon intermittente ou par glissements par blocs. Lorsque le matériau a une granulométrie plus ou moins fine ayant une tendance naturelle à donner des agglomérats ou lorsque l'on a affaire à des produits pulvérulents qui sont plus ou moins humides, le matériau se colle aux parois inclinées 2 et s'écoule difficilement malgré les vibrations créées par les vibrateurs 3 dont la fonction est de faire en sorte que les matériaux n'adhèrent pas, ne s'amoncellent pas ou ne s'accumulent pas à la surface de ces parois. Il se forme donc, malgré ces vibrateurs, ce qu'il est convenu d'appeler une cheminée délimitée, de part et d'autre d'un volume cylindrique central, par des masses ou blocs du matériau garnissant l'intérieur des parois 1 et 2 sur la hauteur plus ou moins importante. Alors ne s'écoulent normalement que les matériaux se trouvant dans ce volume centrale de la trémie. On comprend donc que ce phénomène est au détriment de la capacité de travail d'une installation. En outre, un écoulement intermittent des produits dans la zone 7 ne permet pas d'assurer un dosage régulier et leur évacuation suivant un programme établi par le convoyeur 5. Quelquefois la cheminée peut se refermer à sa partie supérieure conduisant au blocage de l'appareil. Le matériau ne s'écoule plus. Ce phénomène peut s'expliquer par le fait que les vibrations imprimées aux parois 2 par les vibrateur 3 font certes décoller le matériau accumulé mais e même temps contribuent à le densifier au sein de la trémie rendant alors son écoulement plus difficile.

Il a été proposé afin de limiter ces problèmes, des trémies dont la section va en s'élargissant du haut vers le bas et qui sont pourvues d'un fond vibrant, incliné vers une ouverture située à l'aplomb d'une des parois de ladite trémie.

Tel est le cas, notamment, de la trémie décrite dans le brevet français publié sous le N° 2 499 956.

Cependant, ce dispositif ne résout pas complètement les problèmes de densification du matériau, notamment en ce qui concerne les matériaux fins et humides.

En effet, le fond de cette trémie est animé de vibrations ayant une composante verticale, ce qui conduit à coller le matériau contre le fond puis à créer une accumulation de matériau en bas de la trémie qui va réduire le débit d'écoulement de cette dernière, voire l'annuler complètement.

La trémie selon l'invention permet de pallier ces inconvénients pour être utilisée dans le cas de matériaux granulaires, en particulier de matériaux granulaires contenant une forte proportion de fines ou de poudres, de matériaux pulvérulents et analogues, tous ces matériaux pouvant être secs ou humides, collants ou non.

Ainsi, selon l'invention, une trémie de manutention, notamment pour matériaux ayant tendance à s'agglomérer et à se coller aux parois, comportant un fond vibrant surmonté d'un corps en forme de caisson ouvert s'étendant verticalement entre une section supérieure d'entrée et une section inférieure de sortie, la section inférieure de sortie s'étendant sur une surface au moins égale à celle de ladite section supérieure d'entrée, une ouverture s'étendant sur toute la largeur du corps de la trémie, est caractérisée en ce que ledit fond est constitué d'une plaque suspendue au corps de la trémie, ledit fond étant soumis à une vibration unidirectionnelle sensiblement horizontale dans la direction perpendiculaire à celle de ladite ouverture.

De la sorte, le fond vibrant va exercer sur le matériau une action de poussée vers l'ouverture.

La vibration du fond étant dépourvue de composante verticale, il n'y aura pas d'effets de tassement vertical du matériau.

En outre, le fond vibrant se trouvant entièrement en regard de l'ouverture, on évite les effets de densification autour de l'ouverture qui risqueraient d'entraîner des difficultés d'écoulement du matériau.

Suivant d'autres caractéristiques :
- la trémie se présente sous une forme parallélépipédique à quatre faces latérales, sous une forme prismatique, à plus de quatre faces latérales, ou sous une forme cylindrique de révolution ;
- ledit fond présente une surface courbe dont la courbure diminue progressivement de la partie amont vers la partie aval débouchant dans ladite ouverture ;
- ledit fond présente une surface plane inclinée vers ladite ouverture ;
- ledit fond comporte sur sa face supérieure des sculptures en saillies et en paliers destinées à favoriser le cheminement du matériau en circulation de l'amont vers l'aval.

D'autres caractéristiques et avantages de l'invention ressortiront plus clairement de la description qui va suivre faite en regard des dessins annexés sur lesquels :
- la figure 1 est la représentation schématique d'une trémie de type connu à laquelle il a été fait référence dans le préambule de la présente description;
- la figure 2 est la vue en perspective d'une forme de réalisation possible d'une trémie selon l'invention ;
- la figure 3 en est une coupe de profil ;
- les figures 4 et 5 représentent à des échelles différentes des coupes suivant un plan orthogonal au plan de l'ouverture de deux modes de réalisation possibles du fond de la trémie ;
- la figure 6 est une vue de dessus d'une trémie selon l'invention ;
- la figure 7 en est une vue de face et
- la figure 8 est une vue très schématique de la façon dont deux parois opposées de cette trémie peuvent être disposées.

Ces dessins illustrent le cas d'une trémie selon l'invention ayant une section carrée. Bien entendu cette section pourra être circulaire, rectangulaire ou polygonale. Ainsi cette trémie se compose de trois parois verticales 8, d'un fond 12 (qui sera décrit plus en détail ci-après) et d'une paroi frontale 9 au bas de laquelle est ménagée une ouverture 10 sur la partie de surface comprise entre ledit fond et le bord de la partie inférieure de cette paroi 9, l'ouverture pouvant être fermée grâce à une plaque 11 faisant office de trappe ; cette dernière peut être montée coulissante parallèlement au plan de la paroi 9 avec un moyen (non représenté) de réglage de sa position en hauteur, permettant ainsi de faire varier la dimension de l'ouverture 10 et, par conséquent, de faire varier le débit d'évacuation de la trémie en cours d'opération. Cette plaque 11 peut également être montée basculante pour constituer un volet à position également réglable intervenant ainsi sur l'ouverture 10. Ces parois 8 et 9 sont fixes. Le fond du parallélépipède ainsi constitué et ouvert à sa partie supérieure, consiste avantageusement en une plaque légèrement inclinée vers l'ouverture 10. Cette plaque est constituée par une surface concave 12 et présentant une courbure allant en diminuant progressivement au fur-et-à-mesure que l'on se rapproche de l'ouverture 10 comme illustré schématiquement sur la figure 3. Cette forme permet d'exercer une meilleure poussée sur les matériaux se trouvant en amont loin de cette ouverture 10. Cette plaque est montée dans un cadre ouvert du côté de l'ouverture 10 et dont les plaques de bordures parallèles opposées 13 formant flasques sont reliées aux parois verticales opposées correspondantes 8, par exemple par des lames telles que 14 montées entre des équerres à mâchoires telles que 14a-14b. Par ailleurs ce fond est animé d'un mouvement de vibration dans le sens des flèches f1, f2 et dans le plan sensiblement horizontal sous l'action de vibrateurs synchronisés 16 agissant sur les montants 13. Les lames 14 sont en un matériau flexible choisi parmi ceux ayant un coefficient élevé de résistance à l'allongement pour éviter une déformation correspondante sous l'effet du poids du matériau débité par la trémie. En outre, pour éviter toute fuite de ce matériau entre le cadre porteur du fond 10 et la partie basse des parois verticales 8 auxquelles il est relié, on prévoit tout moyen susceptible de combler ou d'obturer la fente comprise entre les parois 8 et les flasques 13-13a comme, par exemple, une bande 18 d'un matériau approprié appliquée comme un joint souple.

Pour rendre plus efficace l'action de poussée du fond oscillant 12 sur les matériaux au cours de leur cheminement vers l'ouverture 10, l'invention prévoit de réaliser sur la face supérieure de ce fond des sculptures en saillies et en paliers 17 comme représenté sur la figure 4.

Selon une variante on peut également prévoir pour simplifier la construction et pour les matériaux pas trop difficiles à s'écouler un fond constitué par une plaque plane 15 inclinée d'un angle α (figure 5). Cette plaque doit toujours être vibrée unidirectionnellement comme la plaque courbe 12 par l'action des vibrateurs 16.

On peut également envisager conformément à l'invention de donner aux parois 8 et 9 une légère inclinaison avec un angle β de quelques degrés par rapport à la verticale de façon que la section horizontale du haut de la trémie soit légèrement plus faible que la section horizontale à sa base. La figure 8 illustre schématiquement cette variante.

On comprendra aisément les résultats favorables que l'on peut obtenir avec une trémie telle que décrite ci-dessus; le matériau ayant été déversé dans la trémie par sa partie supérieure, les vibrations horizontales et unidirectionnelles imprimées à son fond du type 12 ou 15 exercent sur ce matériau une action de poussée vers l'ouverture 10. Le débit peut alors être réglé en faisant varier l'amplitude et la fréquence de ces vibrations et/ou la courbure et/ou l'angle d'inclinaison α dudit fond et/ou les dimensions de l'ouverture 10 en agissant sur la trappe ou le volet 11. Ainsi cette trémie laisse s'écouler le matériau sans créer de zones où le matériau est stagnant. Les vibrations dans le sens horizontal imprimées au fond d'une trémie selon l'invention ont pour rôle d'exercer une poussée sur les matériaux et de les amener vers l'ouverture 10; elles ne présentent aucun effet néfaste de densification de ces matériaux dans la trémie comme c'est le cas des vibrations à composante verticale imprimées aux parois inclinées ou aux fonds des trémies de type connu. L'écoulement des matériaux contenant des fines et des matériaux humides se fait aussi de façon plus régulière, ce qui favorise une large utilisation dans un domaine très étendu d'industrie avec des matériaux très divers.

## Revendications

1. Trémie de manutention, notamment pour matériaux ayant tendance à s'agglomérer et à se coller aux parois, comportant un fond vibrant surmonté d'un corps en forme de caisson ouvert s'étendant verticalement entre une section supérieure d'entrée et une section inférieure de sortie, la section inférieure de sortie s'étendant sur une surface au moins égale à celle de ladite section supérieure d'entrée, une ouverture (10) s'étendant sur toute la largeur du corps (8, 9) de la trémie, caractérisée en ce que ledit fond (12-15, 13, 13a) est constitué d'une plaque (12, 15) suspendue au corps de la trémie, ledit fond (12-15, 13, 13a) étant soumis à une vibration unidirectionnelle sensiblement horizontale (f1, f2) dans la direction perpendiculaire à celle de ladite ouverture (10).

2. Trémie selon la revendication 1, caractérisée en ce que la plaque (12, 15) dudit fond est inclinée avec une pente dirigée vers ladite ouverture (10).

3. Trémie selon la revendication 1 ou 2, caractérisée en ce que la plaque (12) dudit fond présente une surface courbe dont la courbure diminue progressivement de la partie amont vers la partie aval débouchant dans ladite ouverture (10).

4. Trémie selon la revendication 1 ou 2, caractérisée en ce que la plaque (15) dudit fond présente une surface plane inclinée vers ladite ouverture (10)

5. Trémie selon la revendication 3 ou 4, caractérisée en ce que la plaque (12, 15) dudit fond comporte sur sa face supérieure des sculptures en saillies (17) et en paliers destinées à favoriser le cheminement du matériau en circulation de l'amont vers l'aval.

6. Trémie selon l'une des revendications 1 à 5, caractérisée en ce que l'ouverture est située à l'aplomb d'une paroi (9) dudit corps (8, 9).

## Patentansprüche

1. Fördertrichter insbesondere für Materialien, die die Tendenz haben, zusammenzuballen und an den Seitenwänden festzukleben, umfassend einen vibrierenden Boden, der mit einem kastenförmigen, offenen Körper überbaut ist, welcher sich senkrecht zwischen einem oberen Eintrittsabschnitt und einem unteren Austrittsabschnitt erstreckt, wobei der untere Austrittsabschnitt sich über eine Fläche erstreckt, die mindestens gleich derjenigen des oberen Eintrittsabschnitts ist, und eine Öffnung (10), die sich über die gesamte Breite des Körpers (8, 9) des Trichters erstreckt,
**dadurch gekennzeichnet,**
daß der Boden (12 - 15, 13, 13a) aus einer Platte (12, 15) besteht, die an dem Körper des Trichters aufgehängt ist, wobei der Boden (12 - 15, 13, 13a) einer unidirektionalen, ungefähr horizontalen Schwingung (f1, f2) in die Richtung unterliegt, die senkrecht zu jener der Öffnung (10) ist.

2. Trichter gemäß Anspruch 1,
**dadurch gekennzeichnet,**
daß die Platte (12, 15) des Bodens geneigt ist, mit einem Gefälle in Richtung der Öffnung (10).

3. Trichter gemäß Anspruch 1 oder 2,
**dadurch gekennzeichnet,**
daß die Platte (12) des Bodens eine gekrümmte Oberfläche aufweist, deren Krümmung progressiv von dem stromaufwärtigen Abschnitt zum stromabwärtigen Abschnitt, der in die Öffnung (10) mündet, abnimmt.

4. Trichter gemäß Anspruch 1 oder 2,
**dadurch gekennzeichnet,**
daß die Platte (15) des Bodens eine ebene, zur Öffnung (10) geneigte Oberfläche aufweist.

5. Trichter gemäß Anspruch 3 oder 4,
**dadurch gekennzeichnet,**
daß die Platte (12, 15) des Bodens auf ihrer oberen Seite Profile besitzt, die hervorstehen (17) und eben sind und die dazu bestimmt sind, die Fließrichtung des durchfließenden Materials von stromaufwärts nach stromabwärts zu begünstigen.

6. Trichter gemäß einem der Ansprüche 1 bis 5,
**dadurch gekennzeichnet**,
daß die Öffnung senkrecht unter einer Seitenwand (9) des Körpers (8, 9) angeordnet ist.

## Claims

1. A handling hopper, in particular for materials which have a tendency to agglomerate and adhere to the walls, comprising a vibrating base above which is mounted a body in the shape of an open box extending vertically between an upper inlet section and a lower outlet section, the lower outlet section extending over an area at least equal to that of said upper inlet section, an opening (10) extending over the entire width of the body (8, 9) of the hopper, characterised in that said base (12-15, 13, 13a) is formed by a plate (12, 15) suspended from the hopper body, said base (12-15, 13, 13a) being subjected to substantially horizontal unidirectional vibration (f1, f2) in a direction perpendicular to that of said opening (10).

2. A hopper according to claim 1, characterised in that the plate (12, 15) of said base is inclined with a slope directed towards said opening (10).

3. A hopper according to claim 1 or 2, characterised in that the plate (12) of said base has a curved surface, the curvature of which decreases gradually from the upstream portion towards the downstream portion discharging into said opening (10).

4. A hopper according to claim 1 or 2, characterised in that the plate (15) of said base has plane surface inclined towards said opening (10).

5. A hopper according to claims 3 or 4, characterised in that the plate (12, 15) of said base comprises on its upper surface patterns (17) projecting and in stages, which are intended to assist the advance of material circulating from upstream to downstream.

6. A hopper according to any one of claims 1 to 5, characterised in that the opening is situated at the base of a wall (9) of said body (8, 9).
